# EUROPÄISCHE PATENTSCHRIFT

(11) **EP 0 468 361 B1**
(45) Veröffentlichungstag und Bekanntmachung des Hinweises auf die Patenterteilung: **05.07.1995**
(21) Anmeldenummer: 91111995.6
(22) Anmeldetag: 18.07.1991
(51) Int. Cl.: H02H 3/05, H02H 7/085, E05F 15/20, G05B 9/03

(54) **Begrenzung der Schliesskraft an der Schliesskante eines beweglichen Elementes**
Limitation of closing force at the closing edge of a movable element
Limitation de la force de fermeture à l'arête de fermeture d'un élément mobile

(30) Priorität: 26.07.1990 DE 4023719
(43) Veröffentlichungstag der Anmeldung: 29.01.1992
(73) Patentinhaber: DORMA GmbH + Co. KG, D-58256 Ennepetal (DE)
(72) Erfinder: Semelka, Wolfgang, W-5810 Witten 3 (DE)

(56) Entgegenhaltungen:
- DE-A- 1 908 131
- DE-A- 2 259 823
- DE-A- 3 048 989

## Beschreibung

Die Erfindung betrifft eine Begrenzung der Schließkraft an der Schließkante eines beweglichen Elementes. Dieses bewegliche Element kann sowohl eine Tür als auch ein Tor bzw. Garagentor sein.

Aus der DE-C-30 48 989 ist eine Schaltungsanordnung zum Antrieb eines beweglichen Elementes bekannt geworden. An einem Meßwiderstand wird eine dem Motorstrom proportionale Spannung abgegriffen. Diese dem Motorstrom proportionale Spannung wird als Schaltsignal einer Schaltstufe zugeführt. Übergeordnet dem Schaltsignal ist auch ein Zeitglied vorhanden, welches bei Betätigung des Betriebsschalters gesetzt wird und dessen Zeitdauer in jedem Falle größer ist, als die max. mögliche Laufzeit des Elektromotors während eines Verstellvorganges des beweglichen Elementes.

Dem Deutschen Gebrauchsmuster G 87 10 940 ist eine Antriebseinrichtung für ein Tor zu entnehmen, bei dem ein einstellbarer aber fest angeordneter Signalgeber vorhanden ist. Dem Signalgeber ist jeweils ein einem Antriebselement angeordnetes entsprechendes Bezugselement zugeordnet. Diese Bezugselemente sprechen bei der jeweiligen Übereinstimmung mit dem zugeordneten Element an.

Einen elektrischen Torantrieb, bei dem Endschalter oder Stromüberwachung zur Ermittlung von Toröffnungs- und Torschließpunkten entfallen können, ist dem Deutschen Gebrauchsmuster G 87 01 165 zu entnehmen. Dieser Antrieb weist elektronische Speicherelemente auf, in denen die Torendstellungen speicherbar sind. Darüber hinaus ist der Antrieb mit Sensoren zur Ermittlung der Iststellung des Tores versehen. Ein Vergleicher ist an den Ausgang der Sensoren und auch an die Speicherelemente angeschlossen und ist mit seinem Ausgang so ausgestattet, daß der Antrieb abgeschaltet werden kann.

In den US-Patenten 3,095,783 und 3,243,585 werden Schaltkreise beschrieben, bei denen die sicherheitsrelevanten Bauteile redundant ausgeführt worden sind.

Aus der Zeitschrift 'Elektrotechnik', 65, Heft 1/2 vom 31. Januar 1983 wird auf der Seite 56 ein Blockierschutz für Universalmotoren gezeigt. Der Nachteil dieser Schaltung liegt aber darin, wenn der Widerstand R2 niederohmig wird, kein Spannungsabfall mehr vorhanden ist, und der Motor nicht mehr abschaltet. Ferner kann das Sollwertpoti P2 seinen eingestellten Widerstandswert verändern, was für den Benutzer nicht unbedingt erkennbar sein muß, welches aber auf die Sicherheit enorme Einflüsse haben kann.

Die Aufgabe der Erfindung ist es, eine Begrenzung der Schließkraft an der Schließkante eines beweglichen Elementes ohne Endschalter zu realisieren und den notwendigen Schaltungsaufwand so gering wie möglich zu halten, wobei jedoch die Schaltung fehlersicher und damit eigensicher ausgeführt sein soll.

In der deutschen Offenlegungsschrift 22 59 823 wird ein elektronisches Sicherheitssystem offenbart, bei dem zwei gleichartige Meßkanäle vorhanden sind, um ein Eingangssignal redundant zu verarbeiten. Die Betriebsbereitschaft aller wichtigen Bauteile wird ebenfalls durch eine Grenzwerteinheit in Verbindung mit einem UND-Gatter ständig überwacht. Dabei werden die Grenzwerte über ein aktives ODER-Gatter unmittelbar auf die Abschaltlinie weitergeleitet.

Die Aufgabe wird erfindungsgemäß durch die Merkmale des Anspruchs 1 gelöst. Insbesondere wird der Motorstrom über einen niederohmigen Widerstand gemessen, und eine diesem Strom proportionale Spannung zwei getrennten Komparatoren zugeführt. Darüber hinaus wird der Sollwert über einen redundant ausgeführten veränderlichen Widerstand (Potentiometer), dessen Achsen miteinander gekoppelt sind, bei der Inbetriebnahme eingestellt. Dieser Sollwert stellt im Prinzip den max. Abschaltstrom des Antriebsmotors dar. Die Ohmschen Widerstände sind bei beiden Potentiometern gleich. Die Schleifer der Potentiometer werden einzeln an zwei getrennte Komparatoren geführt, die nicht in einem Gehäuse untergebracht sind. Diese Spannungswerte der Potentiometer werden mit dem proportionalen Spannungswert des Stromes verglichen. Überschreitet der Istwert den Sollwert des max. eingestellten Stromes der beiden Potentiometer, so schaltet immer einer bzw. beide Komparatoren gleichzeitig und geben somit einen Abschaltimpuls oder Reversierimpuls an die entsprechende Motorsteuerung.

Die beiden Endpositionen 'Auf' und 'Zu' des beweglichen Elementes werden über die Stromaufnahme des Motors abgefragt. Würde das Element auf ein Hindernis auffahren, so würde sich dieses auch durch eine erhöhte Stromaufnahme im Motor bemerkbar machen. Um die Sicherheit des gesamten Systems zu erhöhen, wird die Stellung des Elementes durch doppelt ausgeführte Sollwert-Potentiometer und auch doppelt ausgeführte Komparatoren realisiert. Würde ein Komparator ausfallen, so ist auf jeden Fall noch ein zweiter identischer Komparator vorhanden, welcher einen sicheren Abschaltimpuls an die dahinter bestehende Elektronik ausführen könnte. Die beiden identischen Potentiometer, welche mit einer Achse verbunden sind, können durch eine entsprechende Beschaltung auf die Ansprechschwelle des bzw. der Komparatoren eingestellt werden. Dieses gilt natürlich auch für die Endbereiche bzw. Gefahrenbereiche. Bei der Dimensionierung muß auch die Hysterese der Komparatoren berücksichtigt werden. Auch sollte die Beschaltung der Potentiometer zur Bewertung und damit für einen gleichen Spannungshub Sorge tragen. Ebenfalls sollten die Bewertungen der Komparatoreingänge und damit die Ansprechschwelle festgelegt werden, da sie ein Maß für den Motorstrom darstellen. Beim Erreichen bzw. Überschreiten einer Ansprechschwelle werden die beiden Ausgänge der Komparatoren umgeschaltet. Beide Ausgänge sind über eine Oder-Verknüpfung miteinander verbunden, so daß auch über diese Möglichkeit sichergestellt ist, daß auf jeden Fall der Ausgangsimpuls an die nachfolgende Elektronik weitergeleitet werden kann. Darüber hinaus sind beide Ausgänge so geschaltet, daß auch optische Anzeigen in Form von z.B. Leuchtdioden vorhanden sind. Aufgrund des Abschaltimpulses werden diese beiden Leuchtdioden kurz aufblitzen, und damit wäre die Schaltung in Ordnung. Die beiden Leuchtdioden sind insbesondere zur Überprüfung der Anlage anzusehen. Wenn eines der beiden Sollwertpotentiometer seine Kraftlimitierung unter dem festgelegten Schwellwert liegt, so passiert nichts, es würde nur früher abgeschaltet, damit ist auf jeden Fall die Sicherheit des gesamten Antriebes gewährleistet.

Sollte wider Erwarten ein Schwellwert nach oben weglaufen, so würde auch in diesem Falle die Sicherheit des Antriebes nicht berührt werden, weil in diesem Falle durch die redundante Ausführung die Schließkraftbegrenzung auf jeden Fall wirksam werden würde. Übergeordnet ist auch noch eine Laufzeitlimitierung für das bewegliche Element schaltungsmäßig realisiert worden. Diese Laufzeitlimitierung kann als zusätzliche Sicherheit gewertet werden, die jedoch nur dann zum Eingriff kommt, wenn das vorbeschriebene Meßsystem ausfallen würde. Nach jedem Abschaltimpuls muß die Motorsteuerung neu gestartet werden.

Die Sollwert-Potentiometer erfahren somit während der Bewegung des Tores keine Änderung. Eine Prüfung des Systemes wird dadurch erreicht, daß nach jedem Haltbefehl für den Motor ein Testsignal an die Eingänge der Komparatoren gelegt wird und bei korrekt arbeitenden Komparatoren auch an beiden Ausgängen weiterverarbeitet wird.

Die vorbeschriebene Schaltungsanordnung zur Begrenzung der Schließkraft an der Schließkante kann bei Garagentorantrieben, normalen Toren, Dreh- und Schiebetüren oder auch Fahrzeugtüren zur Anwendung kommen.

Aufgrund der Tatsache, daß der gesamte Motorantrieb noch mal durch eine Netzsicherung abgesichert ist, handelt es sich bei dem Antrieb um eine dreifache Sicherheit. Diese Sicherheit besteht dadurch, daß das Meßsystem redundant ausgeführt ist, die Laufzeitlimitierung vorhanden ist und die Netzabsicherung zusätzlich durchgeführt wird.

Der gesamte Sicherheitsaspekt kann noch dadurch gesteigert werden, daß die Komparatoren, die z.B. als Operationsverstärker ausgeführt werden können, nicht an der selben Stromversorgung angeschlossen sind, sondern getrennte Stromversorgungen haben.

Eine Möglichkeit der vorbeschriebenen Schaltungsausführung besteht darin, die gesamte Schaltung mit diskreten Bauteilen aufzubauen. Darüber hinaus ist es aber auch möglich, den gesamten Schaltungsaufbau als eine integrierte Schaltung auszuführen. Dieses hat den Vorteil, daß durch Wärmeeinwirkungen die Arbeitspunkte der einzelnen Bauelemente auseinanderdriften. Auch in diesem Falle kann durch eine gezielte Beschaltung eine Bewertung der einzelnen Eingänge der Komparatoren vorgenommen werden.

Statt der Potentiometer können auch Einzelwiderstände, welche zu einem Spannungsteiler zusammengesetzt sind, verwendet werden, die dann entsprechend der gewünschten Vorgabespannung gedrückt werden.

Durch den erfindungsgemäßen Gegenstand wird das umständliche Justieren von Endschaltern oder Kontakten und die damit verbundene Wartung vermieden. Dieses ist besonders bei automatisch bewegten Elementen wie Türen oder Tore wichtig. Bei diesen automatisch betätigten Elementen sind die Sicherheitseinrichtungen von besonderer Wichtigkeit, damit weder Personen noch Sachgegenstände beim Schließen des Elementes eingeklemmt werden können. So ist es gerade beim erfindungsgemäßen Gegenstand einfach, durch die Beobachtung der optischen Anzeige eine funktionsgerechte Kontrolle des bewegten Elementes durchzuführen.

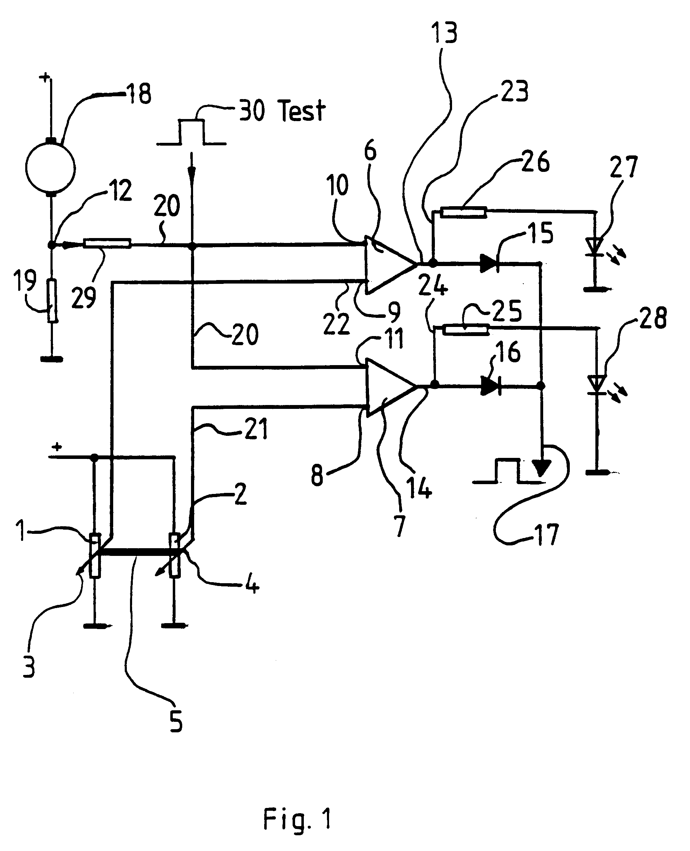

Der erfindungsgemäße Gegenstand soll anhand einer schematisch dargestellten Schaltungsanordnung wie sie in Figur 1 dargestellt ist, näher erläutert werden.

Mit dem Motor (18) liegt in Reihe ein Meßwiderstand (19). Dieser einseitig an Masse liegende Meßwiderstand (19) ist sehr niederohmig und beeinflußt somit nicht die Stromversorgung des Motors (18). Vor dem Meßwiderstand (19) wird die Meßspannung (12), welche proportional dem Motorstrom des Motors (18) ist, abgegriffen. Über eine elektrisch leitende Verbindung (20) wird sie an die Eingänge (10) und (11) der Komparatoren (6) und (7) geführt. Die feste Verbindung (5) ist gleichzeitig mit den beiden Schleifern (4) und (3) der veränderlichen ohmschen Widerstände (1) und (2) formschlüssig verbunden ist. Durch diese direkte Verbindung ist sichergestellt, daß die beiden gleichen ohmschen Widerstände (Potentiometer) gleich bewegt werden für die Sollwerteinstellung. Im Gegensatz zu der Meßspannung (12), welche an beide Komparatoren (6) und (7) geführt wurde, werden die Meßspannungen der Potentiometer getrennt an die Komparatoren (6) und (7) geführt. Von dem Schleifer (3) des veränderlichen ohmschen Widerstandes (1) geht eine elektrisch leitende Verbindung (22) an den Eingang (9) des Komparators (6). Der veränderbare ohmsche Widerstand (2) mit seinem Schleifer (4) wird über die Verbindung (21) mit dem Komparatoreingang (8) des Komparators (7) verbunden. Um Toleranzen der Potentiometer auszugleichen bzw. um eine Spannungsbewertung vorzunehmen, ist es möglich in die Eingänge der beiden Komparatoren Bewertungswiderstände einzubauen. Diese ohmschen Widerstände müssen dann in ihrem Widerstandswert den örtlichen Gegebenheiten angepaßt werden. Damit die Komparatoren (6) und (7) auch ein sehr schnelles Schaltverhalten haben, ist die Rückkopplung des Einganges auf den Ausgang offengelassen worden. Hierdurch wird die Verstärkung des Operationsverstärkers auf den Maximalwert ausgenutzt. So lange aufgrund der nicht dargestellten Spannungsbewertung in den Eingängen die Komparatoren nicht schalten, unterbricht die nicht dargestellte Steuerungselektronik auch nicht die Ansteuerung des elektromotorischen Antriebes. Die redundant ausgeführten ohmschen Widerstände (1) und (2) stellen für die Komparatorschaltung (6) und (7) die Bezugsgröße und damit die Referenz dar. Ändert sich gegenüber der Bezugsgröße nun der Motorstrom, so würde proportional eine höhere Spannung am Punkt (12) auftreten und somit den Komparator aus seiner Grundstellung herausbringen. Dieses würde bedeuten, daß an den Komparatorausgängen (13) und (14) der Komparatoren (6) und (7) ein Spannungsimpuls auftreten würde. Dieser Spannungsimpuls würde über die Dioden (15) und (16) zusammengeführt auf den Schaltausgang (17). Diese in der Figur dargestellte Schaltungsart der Dioden (15) und (16), die mit ihren Kathoden zusammen verbunden sind, stellt eine sogenannte Oder-Verknüpfung dar. Auch hier macht sich wieder die redundant ausgeführte Meßtechnik bemerkbar, dann wenn einer der Komparatoren (6) oder (7) ausfällt, so bleibt die Funktion des zweiten Komparators doch erhalten. Der am Schaltausgang (17) anliegende Schaltimpuls, wird in der nicht dargestellten Steuereinheit weiter verarbeitet und schaltet den Motor des Antriebes aus. Hierdurch ist sichergestellt, daß das bewegte Element sofort unmittelbar zum Stillstand kommt und dadurch weitere Beschädigungen bzw. Verletzungen von Personen nicht eintreten können. Die Kräfte sind in der Regel so bemessen, daß beim Auffahren auf ein Hindernis eine nicht höhere Kraft als 150 N zum Tragen kommt. Aufgrund dieser geringen Kraft ist mit einer Beschädigung von Gegenständen bzw. Verletzungen von Personen nicht zu rechnen. Parallel zu den Ausgängen der Komparatoren (13) und (14) befinden sich über elektrische Verbindungen (23) und (24) optische Anzeigen. Diese optischen Anzeigen sind über die Strombegrenzungswiderstände (25) und (26) mit z.B. Leuchtdioden (27) und (28) verbunden. Beim Anliegen eines Ausgangssignales an den Ausgängen der Komparatoren (6) und (7), werden gleichzeitig beide optischen Anzeigen (27) und (28) zum Leuchten gebracht. Hierdurch ist eine einfache Kontrolle der Anlage gewährleistet, denn wenn beide Anzeigeelemente ein Signal wiedergeben, ist die Anlage beim Auffahren auf ein Hindernis funktionstüchtig.

Auch für den Fall eines Kurzschlusses des Meßwiderstandes (19) bedeutet die Schaltungsart keine Gefahr für den Benutzer. Dadurch wäre am Punkt (12) keine Meßspannung vorhanden, die übergeordnete Motorsicherung würde den Antrieb abschalten. Über das Testsignal (30) wird nach jedem Halt des Tores ein Impuls zur Prüfung der Schaltung an die Komparatoreingänge gegeben.

Wie die vorbeschriebene Schaltungsausführung zeigt, ist für den Betrieb eines beweglichen Elementes, wie z.B. ein Garagentor, keine zusätzliche Sicherheitseinrichtung mehr notwendig. Damit können zusätzliche Sensoren und Lichtschranken entfallen, die ein Produkt teurer und damit aufgrund der mehr verwendeten Bauelemente auch störanfälliger machen können. Mit Hilfe des erfindungsgemäßen Gegenstandes ist somit eine sichere und preiswerte eigensichere Motorsteuerung geschaffen worden. Nachdem die Komparatoren (6) und (7) einen Spannungsimpuls an den Schaltausgang (17) geliefert haben, muß zum weiteren Betrieb der Anlage erst ein separater neuer Startvorgang eingeleitet werden. Es ist jedoch auch möglich, den Antrieb zu reversieren.

### Bezugszeichenverzeichnis

- 1.: veränderbarer ohmscher Widerstand
- 2.: Veränderbarer ohmscher Widerstand
- 3.: Schleifer
- 4.: Schleifer
- 5.: feste mechanische Verbindung
- 6.: Komparator
- 7.: Komparator
- 8.: Komparatoreingang
- 9.: Komparatoreingang
- 10.: Komparatoreingang
- 11.: Komparatoreingang
- 12.: Meßspannung (proportional dem Motorstrom)
- 13.: Komparatorausgang
- 14.: Komparatorausgang
- 15.: Diode
- 16.: Diode
- 17.: Schaltausgang
- 18.: Motor
- 19.: Meßwiderstand
- 20.: elektrische Verbindung
- 21.: elektrische Verbindung
- 22.: elektrische Verbindung
- 23.: elektrische Verbindung
- 24.: elektrische Verbindung
- 25.: Strombegrenzungswiderstand
- 26.: Strombegrenzungswiderstand
- 27.: optische Anzeige
- 28.: optische Anzeige
- 29.: Vorwiderstand
- 30.: Testimpuls

## Patentansprüche

1. Vorrichtung zur Begrenzung der Schließkraft an der Schließkante, min. eines beweglichen Elementes, welches mit elektromotorischer Kraft betrieben wird, deren Steuerung bzw. Regelung durch eine elektronische Schaltungsanordnung den Elektromotor (18) über ein Schaltelement ein, aus- und/oder in der Drehrichtung umschaltet, wobei die Schaltbefehle durch manuelle Taster oder Schalter oder Fernbedienung vorgenommen werden und ein motorstromabhängiges Schaltsignal, welches an einem Meßwiderstand (19) eine dem Motorstrom proportionale Spannung (12) erzeugt, verarbeitet wird, eine Laufzeitbegrenzung für die Abschaltung des Elektromotors (18) vorhanden ist, wobei der Antrieb ohne Endschalter arbeitet, dadurch gekennzeichnet, daß veränderliche ohmsche Widerstände (1, 2) für die Sollwertvorgabe des max. Motorstromes redundant ausgeführt sind und die Schleifer (3, 4) der veränderlichen ohmschen Widerstände (1, 2) durch eine feste Verbindung (5) kraftschlüssig untereinander verbunden sind, und die Sollwertvorgabespannungen an die einen Eingänge (9, 8) zweier verschiedener Komparatoren (6, 7), die sich nicht in einem Gehäuse bzw. auf einem Chip befinden, geführt sind, wobei die dem Motorstrom proportionale Spannung (12) an die anderen Eingänge (10, 11) der Komparatoren (6, 7) angelegt ist und die Ausgänge (13) und (14) über eine Oder-Verknüpfung (15, 16) mit einander verbunden sind und an dem Ausgang der Oder-Verknüpfung (15, 16) ein Schaltsignal (17) zur Steuerung des Antriebsmotors (18) abgegriffen wird, und daß nach einem Haltebefehl für den Motor (18) ein Testsignal (30) an die anderen Komparatoreneingänge (10, 11) gelegt wird.

2. Vorrichtung zur Begrenzung der Schließkraft an der Schließkante nach Anspruch 1, dadurch gekennzeichnet, daß an den Ausgängen (13, 14) der Komparatoren (6, 7) eine Anzeige (27, 28) vorhanden ist.

3. Vorrichtung zur Begrenzung der Schließkraft an der Schließkante nach Anspruch 1, dadurch gekennzeichnet, daß die veränderlichen Widerstände (1, 2) als Potentiometer ausgeführt sind.

## Claims

1. Device for limitation of the closing force at the closing edge of at least one movable element operated by electromotive force, the open or closed loop control of which by an electronic circuit arrangement switches the electric motor (18) on, off, an/or reverses its direction of rotation by way of a switching element, the switching commands being given by manual keys or switches or remote control, and a switching signal which is dependent on the motor current and which, at a measuring resistance (19), generates a voltage (12) proportional to the motor current, is processed, a transit time limitation is provided for the disconnection of the electric motor (18), the drive operating without limit switches, characterised in that variable ohmic resistors (1, 2) for inputting the set value for the maximum motor current is of redundant construction and the wipers (3, 4) of the variable ohmic resistors (1, 2) are non-positively interconnected by a fixed connection (5) and the set-value input voltages are fed to the one inputs of different comparators (6, 7) which are not situated in a housing or in a chip, the voltage (12) proportional to the motor current being applied to the other inputs (10, 11) of the comparators (6, 7) and the outputs (13, 14) being interconnected via an OR gate (15, 16) and a switching signal (17) for controlling the drive motor (18) being taken off the output of the OR gate (16, 16), and that a test signal (30) is apllied to the other comparator inputs (10, 11) after the stop command for the motor (18).

2. Device for limitation of the closing force at the closing edge according to claim 1, characterised in that a display (27, 28) is provided at the outputs (13, 14) of the comparators (6, 7).

3. Device for limitation of the closing force at the closing edge according to claim 1, characterised in that the variable resistors (1, 2) are contructed as potentiometers.

## Revendications

1. Dispositif pour la limitation de la force de fermeture à l'arête de fermeture d'au moins un élément mobile. qui est entraîné par un moteur électrique (18), dont la commande ou la régulation met en marche, arrête et/ou inverse le sens de rotation du moteur électrique au moyen d'un dispositif de commutation électronique par l'intermédiaire d'un commutateur, dans laquelle les ordres de commutation sont réalisés à l'aide de touches ou interrupteurs manuels ou d'une commande à distance et un signal de commutation fonction du courant du moteur est retraité, courant qui produit sur une résistance de mesure (19) une tension (12) proportionelle à l'intensité du moteur, dans laquelle il y a une limitation du temps de commutation du moteur électrique, I'entraînement fonctionnant sous commutateur de fin de course, dispositif pour limitation de la force de fermeture caractérisé en ce que des résistances ohmiques variables (1, 2) sont réalisées de façon redondante pour définir la valeur de consigne de l'intensité maximale du moteur, et les couteaux (3, 4) des résistances ohmiques variables (1, 2) sont reliés l'un à l'autre par une liaison par la force fixe (5) et les tensions prévues pour les valeurs de consigne sont amenées aux les entrées (9, 8) des comparateurs différents (6, 7), qui ne se trouvent pas dans un boîtier ou dans une puce, la tension (12) proportionelle à l'intensité du moteur étant appliquée aux les entrées autres (10, 11) des comparateurs (6, 7) et les sorties (13, 14) étant reliées entre elles par l'intermédiaire d'une liaison OU (15, 16) et un signal de commutation (17) pour la commande du moteur d'entraînement (18) étant prélevé à la sortie de la liaison OU (15, 16) et que après l'ordre d'arrêt au moteur (18) on applique un signal d'essai (30) aux entrées des comparateurs (10, 11).

2. Dispositif pour la limitation de la force de fermeture à l'arête de fermeture selon la revendication 1, caractérisé en ce qu'il y a aux sorties (13, 14) des comprateurs (6, 7) un affichage (27, 28).

3. Dispositif pour la limitation de la force de fermeture à l'arête de fermeture selon la revendication 1, caractérisé en ce que les résistances variables (1, 2) sont réalisées comme des potentiomètres.
